# EUROPEAN PATENT APPLICATION

(11) **EP 3 428 833 A1**
(43) Date of publication of application: **16.01.2019**
(21) Application number: 18183117.3
(22) Date of filing: 12.07.2018
(51) Int. Cl.: G06K 7/10

(54) **RADIO TAG READING DEVICE AND RADIO TAG READING METHOD**

(30) Priority: 12.07.2017 JP 2017136583
(71) Applicant: Toshiba Tec Kabushiki Kaisha, Shinagawa-ku Tokyo 141-0032 (JP)
(72) Inventor: Murofushi, Nobuo, Tokyo, 141-8562 (JP)
(74) Representative: Hoffmann Eitle

(57) **Abstract**

A radio tag reading device performs wireless communication with a plurality of radio tags to acquire predetermined information from the plurality of radio tags. The radio tag reading device includes a controller configured to perform a first acquiring process and a second acquiring process. The first acquiring process includes acquiring predetermined information from a first radio tag among the plurality of radio tags by transmitting a predetermined request one or more times by wireless communication at a first transmission rate. The second acquiring process includes acquiring predetermined information from a second radio tag different from the first radio tag within the plurality of radio tags by transmitting the request one or more times by wireless communication at a second transmission rate slower than the first transmission rate after the acquisition of the predetermined information in the first acquiring process is ended.

## Description

### CROSS-REFERENCE TO RELATED APPLICATION

This application is based upon and claims the benefit of priority from Japanese Patent Application No. 2017-136583, filed July 12, 2017, the entire contents of which are incorporated herein by reference.

### FIELD

Embodiments described herein relate generally to a radio tag reading device and a radio tag reading method.

### BACKGROUND

In related art, an inventory management system is known that manages an inventory of commodities or the like, using wireless communication technology. In such an inventory management system, a radio tag reading device for reading information from a radio tag attached to a commodity displayed on a commodity shelf or the like by transmitting radio waves over a wide range is used.

In the inventory management system as described above, if the number of radio tags from which information is to be read is large, it takes a considerable amount of time to read information from all the radio tags. Also, for example, if an information reading work is performed at a fixed positon, the work efficiency thereof is lowered because of increase of the number of radio tags within a range where radio waves from the radio tag reading device do not reach.

### SUMMARY OF THE INVENTION

One of the objects of the present invention is to improve prior art techniques and overcome at least some of the prior art problems as for instance above illustrated.

According to a first aspect of the present invention, it is provided a radio tag reading device configured to acquire predetermined information from a plurality of radio tags by executing wireless communication with the plurality of radio tags, the device comprising:
a controller configured to perform a first acquiring process and a second acquiring process,
the first acquiring process including acquiring the predetermined information from a first radio tag among the plurality of radio tags by transmitting a predetermined request one or more times by the wireless communication at a first transmission rate; and
the second acquiring process including acquiring the predetermined information from a second radio tag different from the first radio tag within the plurality of radio tags by transmitting the request one or more times by the wireless communication at a second transmission rate slower than the first transmission rate after the acquisition of the predetermined information in the first acquiring process is ended.

Optionally, in the device according to the first aspect of the invention, a first communicable range, within which a radio tag may be communicated to by the wireless communication at the first transmission rate, is less than a second communicable range, within which a radio tag may be communicated to by the wireless communication at the second transmission rate.

Optionally, in the device according to the first aspect of the invention, the first acquiring process includes ending acquisition of the predetermined information when a value indicating the number of responses from the first radio tags for one request is less than a first threshold value.

Optionally, in the device according to the first aspect of the invention, the first acquiring process includes setting the first threshold as a ratio of a maximum number of responses receivable in the first acquiring process for the one request.

Optionally, in the device according to the first aspect of the invention, the controller is further configured to perform a receiving process including receiving a change of the first threshold value.

Optionally, in the device according to the first aspect of the invention, the controller is further configured to perform a third acquiring process including acquiring the predetermined information from a third radio tag that is different from the first radio tag and the second radio tag among the plurality of radio tags by transmitting the request by the wireless communication at a third transmission rate slower than the second transmission rate after the acquisition of the predetermined information by the second acquisition unit is ended, when a value indicating the number of responses from the second radio tags to the first request transmitted in the second acquiring process is equal to or greater than a second threshold value.

Optionally, in the device according to the first aspect of the invention, a first communicable range, within which a radio tag may be communicated to by the wireless communication at the first transmission rate, is less than a second communicable range, within which a radio tag may be communicated to by the wireless communication at the second transmission rate.

Optionally, in the device according to the first aspect of the invention, the second communicable range is less than a third communicable range, within which a radio tag may be communicated to by the wireless communication at the third transmission rate.

Optionally, in the device according to the first aspect of the invention, the controller is further configured to perform a third acquiring process including acquiring the predetermined information from a third radio tag that is different from the first radio tag and the second radio tag among the plurality of radio tags by transmitting the request by the wireless communication at a third transmission rate slower than the second transmission rate after the acquisition of the predetermined information by the second acquisition unit is ended, when a value indicating the density of the second radio tags is equal to or greater than a second threshold value.

Optionally, in the device according to the first aspect of the invention, a first communicable range, within which a radio tag may be communicated to by the wireless communication at the first transmission rate, is less than a second communicable range, within which a radio tag may be communicated to by the wireless communication at the second transmission rate.

Optionally, in the device according to the first aspect of the invention, the second communicable range is less than a third communicable range, within which a radio tag may be communicated to by the wireless communication at the third transmission rate.

According to a second aspect of the present invention, it is provided a radio tag reading method of acquiring predetermined information from a plurality of radio tags by executing wireless communication with the plurality of radio tags, the method comprising:
performing a first acquiring process including acquiring the predetermined information from a first radio tag among the plurality of radio tags by transmitting a first request by the wireless communication at a first transmission rate; and
performing a second acquiring process including acquiring the predetermined information from a second radio tag different from the first radio tag by transmitting the second request by the wireless communication at a second transmission rate slower than the first transmission rate after the acquisition of the predetermined information is ended.

Optionally, in the radio tag reading method according to the second aspect of the invention, a first communicable range, within which a radio tag may be communicated to by the wireless communication at the first transmission rate, is less than a second communicable range, within which a radio tag may be communicated to by the wireless communication at the second transmission rate.

Optionally, in the radio tag reading method according to the second aspect of the invention, the first acquiring process includes ending acquisition of the predetermined information when a value indicating the number of responses from the first radio tags for one request is less than a first threshold value.

Optionally, in the radio tag reading method according to the second aspect of the invention, the first acquiring process includes setting the first threshold as a ratio of a maximum number of responses receivable in the first acquiring process for the one request.

Optionally, the radio tag reading method according to the second aspect of the invention, further comprises performing a receiving process including receiving a change of the first threshold value.

Optionally, the radio tag reading method according to the second aspect of the invention, further comprises performing a third acquiring process including acquiring the predetermined information from a third radio tag that is different from the first radio tag and the second radio tag among the plurality of radio tags by transmitting the request by the wireless communication at a third transmission rate slower than the second transmission rate after the acquisition of the predetermined information by the second acquisition unit is ended, when a value indicating the number of responses from the second radio tags to the first request transmitted in the second acquiring process is equal to or greater than a second threshold value.

Optionally, in the radio tag reading method according to the second aspect of the invention, a first communicable range, within which a radio tag may be communicated to by the wireless communication at the first transmission rate, is less than a second communicable range, within which a radio tag may be communicated to by the wireless communication at the second transmission rate.

Optionally, in the radio tag reading method according to the second aspect of the invention, the second communicable range is less than a third communicable range, within which a radio tag may be communicated to by the wireless communication at the third transmission rate.

Optionally, the radio tag reading method according to the second aspect of the invention, further comprises performing a third acquiring process including acquiring the predetermined information from a third radio tag that is different from the first radio tag and the second radio tag among the plurality of radio tags by transmitting the request by the wireless communication at a third transmission rate slower than the second transmission rate after the acquisition of the predetermined information by the second acquisition unit is ended, when a value indicating the density of the second radio tags is equal to or greater than a second threshold value.

### DESCRIPTION OF THE DRAWINGS

FIG. 1 is a diagram illustrating a constitution of an inventory management system using a radio tag reading device according to some embodiments;
FIG. 2 is a block diagram illustrating a hardware constitution of a radio tag according to some embodiments;
FIG. 3 is a block diagram illustrating a hardware constitution of a radio tag reading device according to some embodiments;
FIG. 4 is a diagram illustrating characteristics of a first transmission rate and a second transmission rate in some embodiments;
FIG. 5 is a block diagram illustrating functions implemented in a control unit of the radio tag reading device according to some embodiments;
FIG. 6 is a flowchart illustrating a series of processing executed in some embodiments;
FIG. 7 is a block diagram illustrating functions implemented in a control unit of a radio tag reading device according to further embodiments; and
FIG. 8 is a flowchart illustrating a series of processing executed in further embodiments.

### DETAILED DESCRIPTION

A radio tag reading device according some embodiments executes wireless communication with a plurality of radio tags to acquire predetermined information from the plurality of radio tags. The radio tag reading device includes a controller including a first acquisition unit, performing a first acquiring process, and a second acquisition unit, performing a second acquiring process. The first acquiring process includes acquiring predetermined information from a first radio tag among the plurality of radio tags by transmitting a predetermined request one or more times by the wireless communication at a first transmission rate. The second acquiring process includes acquiring predetermined information from a second radio tag different from the first radio tag within the plurality of radio tags by transmitting the request one or more times by wireless communication at a second transmission rate slower than the first transmission rate after the acquisition of the predetermined information in the first acquiring process is ended.

Embodiments of a radio tag reading device are described with reference to the accompanying drawings. In the following, an example in which the radio tag reading device according to the embodiments is described as a portable RFID (Radio Frequency IDentification) reader/writer used for an inventory management system of commodities, but the technology used in the embodiments can also be applied to a fixed type RFID reader/writer.

### Embodiments

First, an arrangement of some embodiments is described.

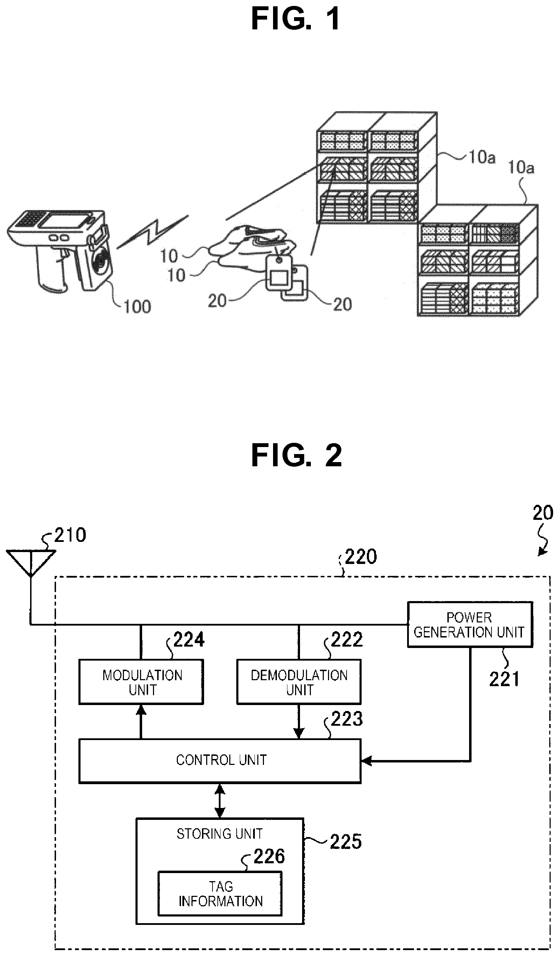

FIG. 1 is a diagram illustrating an arrangement of an inventory management system using a radio tag reading device 100 according to some embodiments. As illustrated in FIG. 1, the inventory management system according to some embodiments includes a radio tag 20 and a radio tag reading device 100. The radio tag 20 and the radio tag reading device 100 are configured to be able to perform wireless communication using electromagnetic waves or the like. In the following description, a wireless communication method between the radio tag reading device 100 and the radio tag 20 is performed as a time slot method.

The radio tag 20 is an RFID tag, referred to as an electronic tag, an IC (Integrated Circuit) tag or the like, which is attached to a commodity 10 to be sold at a retail store. The radio tag 20 stores predetermined information (tag information 226 to be described later) including a commodity code for identifying the commodity 10. The radio tag 20 executes reading and writing of tag information 226 stored therein based on a signal (radio wave signal) transmitted and received to and from the radio tag reading device 100.

The radio tag reading device 100 reads the tag information 226 stored in the radio tag 20 by wireless communication according to an operation by an operator. The operator operates the radio tag reading device 100 pointed to a commodity shelf 10a on which the commodity 10 is displayed to receive tag information 226 transmitted from the radio tag 20 attached to the commodity 10 through wireless communication.

More specifically, the radio tag reading device 100 transmits radio wave for requesting transmission of the tag information 226 to the radio tag 20 according to the operation by the operator. Then, the radio tag 20 replies with radio waves including tag information 226 stored therein, in response to the request from the radio tag reading device 100. This reply is executed by radio tags 20 existing only in a range within which radio wave can reach from the radio tag reading device 100. The radio tag reading device 100 reads the tag information 226 stored in the radio tag 20 by receiving radio waves including the tag information 226 transmitted from the radio tag 20.

Although not illustrated in FIG. 1, in the first embodiment, a server device that collectively receives information read by the radio tag reading device 100 may be provided. The server device is, for example, a personal computer. The server device may be provided by a cloud service that provides computer resources such as hardware and software.

Next, a hardware arrangement of various devices provided in the inventory management system according to some embodiments is described.

FIG. 2 is a block diagram illustrating a hardware arrangement of the radio tag 20 according to the first embodiment. As illustrated in FIG. 2, the radio tag 20 includes an antenna 210 and an IC chip 220.

The antenna 210 is a device for transmitting and receiving radio waves to and from the radio tag reading device 100. The IC chip 220 includes a power generation unit 221, a demodulation unit 222, a control unit 223, a modulation unit 224, and a storing unit 225.

The power generation unit 221 supplies power to each unit of the IC chip 220 with electromagnetic induction, using the radio wave received by the antenna 210. The demodulation unit 222 demodulates the radio wave received by the antenna 210 to output the radio wave to the control unit 223.

The control unit 223 has functions of writing information demodulated by the demodulation unit 222 to the storing unit 225 and reading information from the storing unit 225 to output the information to the modulation unit 224. The modulation unit 224 modulates the information output from the control unit 223 and outputs the modulated information to the antenna 210. The information output from the modulation unit 224 is transmitted with radio waves via the antenna 210.

The storing unit 225 may be a rewritable nonvolatile storage medium such as an EEPROM (Electrically Erasable Programmable Read-Only Memory. The storing unit 225 can maintain the stored information even if power is cut off. Tag information 226 is stored in the storing unit 225.

The tag information 226 includes identification information and sales information. The identification information, i.e., commodity code described above, is used to identify the commodity 10. The sales information indicates a state of sale of the commodity 10 to which the radio tag 20 is attached.

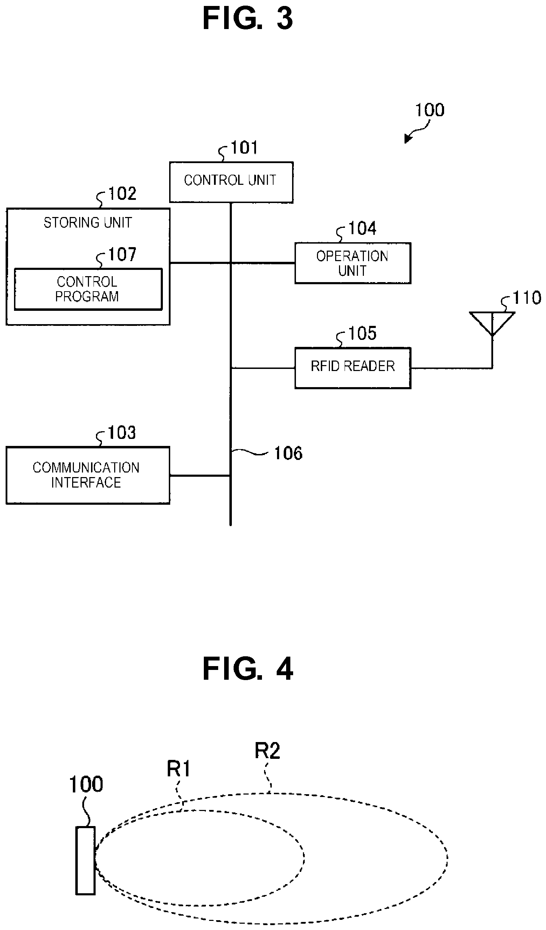

FIG. 3 is a block diagram illustrating a hardware arrangement of the radio tag reading device 100 according to some embodiments. As illustrated in FIG. 3, the radio tag reading device 100 includes a control unit 101 (controller), a storing unit 102 (memory), a communication interface 103, an operation unit 104, an RFID reader 105, and an antenna 110. These components are connected to each other via a system bus 106.

The control unit 101 collectively controls the operation of the radio tag reading device 100 to realize various functions of the radio tag reading device 100. The control unit 101 includes a processor, a memory, and the like.

The storing unit 102 is a storage device such as a flash memory. In the storing unit 102, a control program 107 read and executed by the processor of the control unit 100 is stored. Needless to say, information other than the control program 107 can also be stored in the storing unit 102.

The communication interface 103 is used to communicate with external apparatuses (for example, server device described above).

The operation unit 104 is a device that receives an operation input by the operator of the radio tag reading device 100. The operation unit 104 is arranged with hardware keys such as buttons and switches, a touch panel provided on the display, and the like.

The RFID reader 105 controls the antenna 110 to read the tag information 226 stored in the radio tag 20. More specifically, when the tag information 226 stored in the radio tag 20 is read, the RFID reader 105 first transmits radio waves for requesting transmission of the tag information 226 to the radio tag 20 through the antenna 110. Then, the RFID reader 105 receives radio waves replied from the radio tag 20 through the antenna 110 in response to the request, demodulates the received radio waves, and extracts the tag information 226.

In the inventory management system as described above, if the number of the radio tags 20 from which the tag information 226 is read is large, it takes a considerable amount of time to read the tag information 226 from all of the radio tags 20. For example, if the reading of the tag information 226 is performed at a fixed position, the number of the radio tags 20 which are present in a range at which the request from the radio tag reading device 100 does not reach also increases and thus, efficiency of the work is lowered.

Accordingly, the radio tag reading device 100 according to some embodiments uses a plurality of transmission rates having different characteristics in stages when requesting the radio tag 20 to transmit the tag information 226 to realize reduction of the time of work and an increase of the efficiency in work of reading tag information 226 from a large number of radio tags 20.

For example, the radio tag reading device 100 according to some embodiments transmits a request to the radio tag 20, using two types of transmission rates of a first transmission rate (relatively high) and a second transmission rate (relatively low) (slower than the first transmission rate) in stages.

FIG. 4 is a diagram illustrating the characteristics of the first transmission rate and the second transmission rate used in the first embodiment. In FIG. 4, R1 represents a range (a communicable range) within which the request of the first transmission rate reaches and R2 represents a range within which the request of the second transmission rate reaches.

As illustrated in FIG. 4, if communicable distances at the first transmission rate and the second transmission rate are compared with each other, the communicable range R2 at the second transmission rate is larger than the communicable range R1 at the first transmission rate.

The reason why a difference in communication range occurs due to a difference in transmission rate is briefly described. Generally, in wireless communication, if the transmission rate of a radio wave signal is fast, it is susceptible to noise. If an output level of the radio wave signal decreases, a transmission error tends to occur. Accordingly, if transmission output and reception sensitivity are the same, the slower the transmission rate, the larger the range (communicable range) within which the radio signal reaches.

As described above, it can be said that the first transmission rate has characteristics of matters that the communicable range at the first transmission rate is smaller than that at the second transmission rate, but reading speed of the tag information 226 from the radio tag 20 at the first transmission rate is higher than that at the second transmission rate. Also, it can be said that the second transmission rate has characteristics of matters that reading speed of the tag information 226 from the radio tag 20 at the second transmission rate is lower than that at the first transmission rate, but the communicable range at the second transmission rate is larger than that at the first transmission rate.

Taking into consideration the characteristics described above, when the radio tag reading device 100 according to some embodiments requests the radio tags 20 to transmit the tag information 226, the radio tag reading device first transmits a request at the first transmission rate to acquire the tag information 226 from the radio tags 20 located at a comparatively short distance therefrom and thereafter, transmits a request at the second transmission rate to acquire the tag information 226 from the remaining radio tags 20 located at a relatively long distance therefrom. With this, it is possible to achieve shortening in the reading work of the tag information 226 by using the first transmission rate and to achieve efficiency in reading work of the tag information 226 by using the second transmission rate.

In some embodiments, it is arranged, as a matter of course, that the radio tags 20 responding to the request at the first transmission rate do not respond to the request at the subsequent second transmission rate. That is, the radio tag reading device 100 executes a request at the first transmission rate and a subsequent request at the second transmission rate as a single process (round) and the radio tags 20 do not respond again until the round is updated if the radio tag 20 responds once in the single process.

In some embodiments, such use of the first transmission rate and the second transmission rate is realized by the following functions.

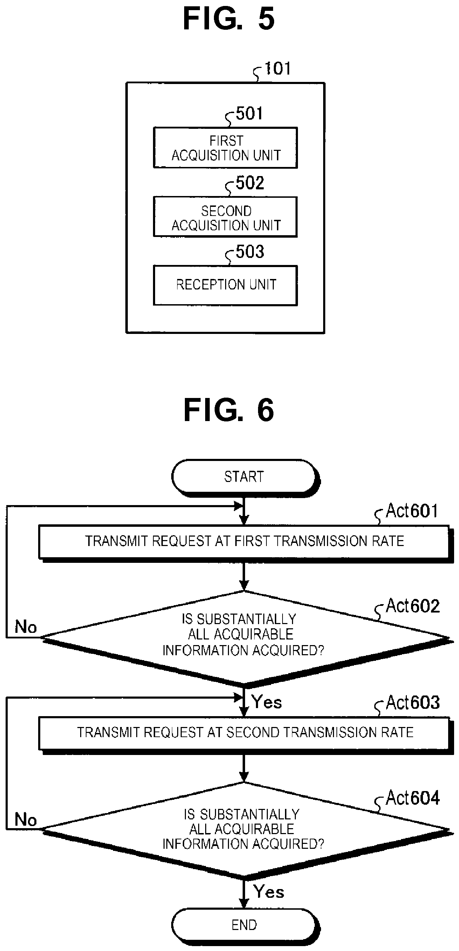

FIG. 5 is a block diagram illustrating functions realized in the control unit 101 of the radio tag reading device 100 according to some embodiments. As illustrated in FIG. 5, a first acquisition unit 501, a second acquisition unit 502, and a reception unit 503 are realized in the control unit 101. These functions are realized on the memory of the control unit 101 as a result of the processor of the control unit 101 reading and executing the control program 107 of the storing unit 102.

In some embodiments, the function illustrated in FIG. 5 is not limited to being realized by cooperation of hardware (control unit 101) and software (control program 107) and the function illustrated in FIG. 5 may be realized only by dedicated hardware (circuit).

The first acquisition unit 501 transmits a request for transmitting the tag information 226 to the radio tags 20 at the first transmission rate to acquire the tag information 226 from the radio tags 20 (hereinafter, referred to as a first radio tag) existing in the range within which the request can reach. If acquisition of the tag information 226 from substantially all of the first radio tags is completed, the first acquisition unit 501 ends the acquisition of the tag information 226.

In some embodiments, as described above, the wireless communication method executed between the radio tag reading device 100 and the radio tag 20 is the time slot method. For that reason, there is a limit to the number of responses from the radio tags 20 that the first acquisition unit 501 can receive for one request.

Accordingly, in the first embodiment, the first acquisition unit 501 repeatedly executes transmission of the request at the first transmission rate. If a value indicating the number of responses from the first radio tags for one request is less than a predetermined threshold value (first threshold value), the first acquisition unit 501 determines that acquisition of responses from substantially all of the first radio tags is completed and then ends the acquisition of the tag information 226 from the first radio tags.

The first threshold value may be set as a specific numerical value corresponding to the number of responses, or may be set as a ratio to the maximum value of the number of responses receivable to the first acquisition unit 501 for one request.

The second acquisition unit 502 acquires the tag information 226 from the radio tags 20 different from the first radio tags, more specifically, the remaining radio tags 20 (hereinafter referred to as a second radio tag) from which the tag information 226 is not acquired by the first acquisition unit 501 by transmitting a request for transmitting the tag information 226 to the radio tags 20 at the second transmission rate after the acquisition of the tag information 226 by the first acquisition unit 501 is ended. Then, if acquisition of the tag information 226 from substantially all of the second radio tags is completed, the second acquisition unit 502 ends the acquisition of the tag information 226.

A determination criterion for determining whether acquisition of the tag information 226 from substantially all of the second radio tags is completed or not can be set substantially similar to the determination criterion described above for determining whether acquisition of the tag information 226 from substantially all of the first radio tags is completed or not and thus, description thereof is omitted.

Meanwhile, if the operator can arbitrarily change the first threshold value serving as a reference for switching from the first transmission rate to the second transmission rate, convenience is further improved.

Accordingly, in the first embodiment, the reception unit 503 is provided as a function of receiving change of the first threshold value by the operator.

Next, a control operation of some embodiments is described.

FIG. 6 is a flowchart illustrating a series of processing executed in some embodiments. The processing in FIG. 6 starts in response to an operation of the radio tag reading device 100 by the operator.

In the processing in FIG. 6, firstly, in Act 601, the first acquisition unit 501 transmits a request for transmitting the tag information 226 at the first transmission rate to the radio tags 20 from which the tag information 226 is not yet acquired.

In Act 602, the first acquisition unit 501 determines whether substantially all the information that can be acquired by the processing in Act 601 are acquired or not, in other words, determines whether the acquisition of the tag information 226 from substantially all of the first radio tags within the range where the request of the first transmission rate can reach is completed or not. For this determination, the first threshold value described above is used.

In Act 602, if it is determined that the acquisition of the tag information 226 from substantially all of the first radio tags is not yet completed, processing in Act 601 is re-executed. On the other hand, in Act 602, if it is determined that acquisition of the tag information 226 from substantially all of the first radio tags is completed, acquisition of the tag information 226 by the first acquisition unit 501 is ended, and then processing in Act 603 is performed.

In Act 603, the second acquisition unit 502 transmits a request for transmitting the tag information 226 at the second transmission rate to the radio tags 20 from which the tag information 226 is not yet acquired.

In Act 604, the second acquisition unit 502 determines whether substantially all the information that can be acquired by processing in Act 603 are acquired or not, in other words, determines whether the acquisition of the tag information 226 from substantially all of the remaining second radio tags from which the tag information 226 is not yet acquired by the first acquisition unit 501 is completed or not. Also, in this determination, the same threshold value as the first threshold value described above is used.

In Act 604, if it is determined that the acquisition of the tag information 226 from substantially all of the second radio tags is not yet completed, processing in Act 603 is re-executed. On the other hand, in Act 604, if it is determined that the acquisition of the tag information 226 from substantially all of the second radio tags is completed, the acquisition of the tag information 226 by the second acquisition unit 502 is ended, and thus the processing in FIG. 6 is ended.

As described above, the radio tag reading device 100 according to some embodiments is configured to acquire predetermined information (tag information 226) from the plurality of radio tags 20 by executing wireless communication with the plurality of radio tags 20. The radio tag reading device 100 includes the first acquisition unit 501 which acquires the tag information 226 from the first radio tags among the plurality of radio tags 20 by transmitting a predetermined request one or more times by wireless communication at the first transmission rate and the second acquisition unit 502 which acquires the tag information 226 from the second radio tag different from the first radio tag among the plurality of radio tags 20 by transmitting the request one or more times by wireless communication at a second transmission rate slower than the first transmission rate after the acquisition of the predetermined information 226 by the first acquisition unit 501 is ended. As described above, the first radio tag is the radio tag 20 in the range within which the request at the first transmission rate can reach and the second radio tag is the remaining radio tag 20 from which the tag information 226 is not acquired by the first acquisition unit 501.

According to the arrangement described above, it can achieve shortening in the reading work of tag information 226 by using the first transmission rate and achieve efficiency in the reading work of tag information 226 by further using the second transmission rate thereafter. Accordingly, in some embodiments, shortening and efficiency in the reading work of tag information 226 from a large number of radio tags 20 can be realized.

### Further Embodiment

In some embodiments, an example in which two types of transmission rates, that is, the first transmission rate and the second transmission rate, are used in stages is described. However, as in further embodiments to be described below, the technique of some embodiments can also be applied to an example in which two or more types of transmission rates are used in stages.

For example, in some embodiments, if the number of responses for a first request at the second transmission rate is relatively large, it is estimated that the arrangement density of the radio tags 20 is large and a lot of the radio tags 20 from which the tag information 226 is not yet acquired remain. Accordingly, in this case, after acquisition of the tag information 226 at the second transmission rate is ended, there is room for further executing the acquisition of the tag information 226 at a new transmission rate at which the communicable range is larger than that at the second transmission rate, that is, the transmission rate slower than the second transmission rate.

Accordingly, in further embodiments, similarly to some embodiments, firstly, the tag information 226 is acquired from the radio tags 20 by using the first transmission rate and the second transmission rate in stages. Then, in further embodiments, if the number of responses for the first request at the second transmission rate is large to some extent, wireless communication with the third transmission rate slower than the second transmission rate is further used to acquire the tag information 226 from the remaining radio tags 20 from which the tag information 226 is not acquired by the request at the first transmission rate and the second transmission rate.

Hereinafter, functions of further embodiments are described more specifically.

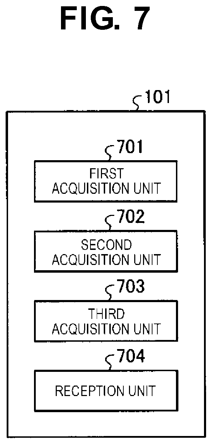

FIG. 7 is a block diagram illustrating functions realized in the control unit 101 of the radio tag reading device 100 according to further embodiments. Each function illustrated in FIG. 7 is realized in such a way that a control program different from the control program 107 (see FIG. 3) according to some embodiments is executed by the control unit 101.

As illustrated in FIG. 7, in further embodiments, a third acquisition unit 703 that acquires the tag information 226 at the third transmission rate described above is provided in addition to the first acquisition unit 701, the second acquisition unit 702, and the reception unit 704 correspondingly similar to the first acquisition unit 501, the second acquisition unit 502, and the reception unit 503 in some embodiments (see FIG. 5).

If it is estimated that arrangement density of the radio tags 20 is large and a lot of the radio tags 20 from which the tag information 226 is not yet acquired remain, the third acquisition unit 703 starts acquisition of the tag information 226 at the third transmission rate after two stages of processes by the first acquisition unit 701 and the second acquisition unit 702 are ended. Then, if it is determined that the acquisition of the tag information 226 from substantially all of the remaining radio tags 20 is completed, the third acquisition unit 703 ends the acquisition of the tag information 226.

More specifically, if the value indicating the number of responses for the first request transmitted by the second acquisition unit 702 is greater than or equal to a predetermined threshold value (second threshold value), the third acquisition unit 703 acquires the tag information 226 from the remaining radio tags 20 (hereinafter, referred to as a third radio tag) from which the tag information 226 is not yet acquired by the first acquisition unit 701 and the second acquisition unit 702 by transmitting the request by wireless communication at the third transmission rate that is slower than the second transmission rate used by the second acquisition unit 702 after the acquisition of the tag information 226 by the second acquisition unit 702 is completed. Then, if it is determined that the number of responses from the third radio tags to the request at the third transmission rate decreases, the third acquisition unit 703 ends acquisition of the tag information 226.

Other arrangements according to further embodiments are the same as those in some embodiments and thus, description thereof is omitted.

Then, a control operation in further embodiments is described.

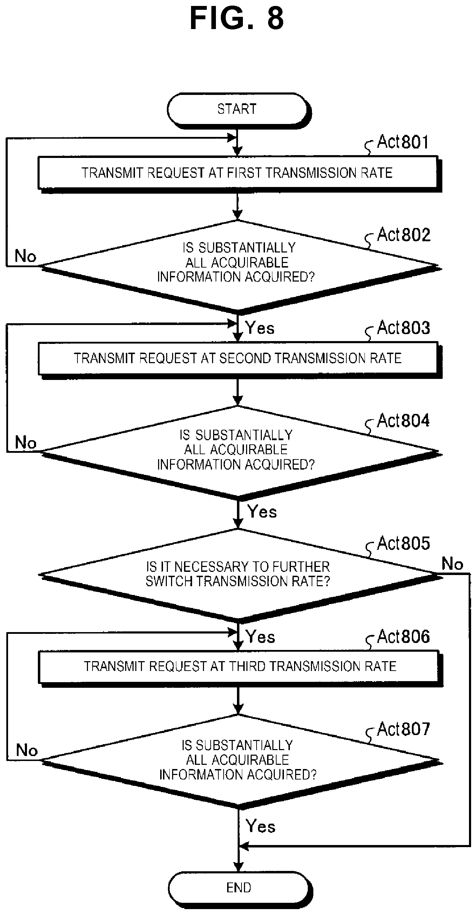

FIG. 8 is a flowchart illustrating a series of processing executed in further embodiments. Each processing in Act 801 to Act 804 in FIG. 8 is similar to each processing in Act 601 to Act 604 in the some embodiments (see FIG. 6) and thus, in the following, description is made only on processing after Act 804.

As illustrated in FIG. 8, in further embodiments, in Act 804, if it is determined that substantially all the information capable of being acquired by the second acquisition unit 702 are acquired, then processing in Act 805 is executed.

In Act 805, the third acquisition unit 703 determines whether it is necessary to further switch a transmission rate or not, that is, whether it is necessary to acquire the tag information 226 at the third transmission rate that is slower than the second transmission rate or not. The determination in Act 805 is performed based on a first processing in Act 803, that is, whether the number of responses for the first request transmitted by the second acquisition unit 702 at the second transmission rate is equal to or greater than a predetermined threshold value (second threshold value) or not.

In Act 805, if it is determined that the number of responses to the first processing in Act 803 is less than the second threshold value, it is determined that further switching of the transmission rate is unnecessary, and the processing is ended. On the other hand, in Act 805, if it is determined that the number of responses for the first processing in Act 803 is equal to or greater than the second threshold value, it is determined that further switching of the transmission rate is required, and processing in Act 806 is executed.

In Act 806, the third acquisition unit 703 transmits a request for transmitting the tag information 226 at the third transmission rate to the radio tags 20 from which the tag information 226 is not acquired.

Then, in Act 807, the third acquisition unit 703 determines whether substantially all the information that can be acquired by processing in Act 806 are acquired or not, in other words, determines whether acquisition of the tag information 226 from substantially all of the third radio tags, which are the remaining radio tags 20, from which the tag information 226 is not acquired by the first acquisition unit 701 and the second acquisition unit 702, is completed or not.

In Act 807, if it is determined that the acquisition of the tag information 226 from substantially all of the third radio tags is not completed yet, the processing in Act 806 is re-executed. On the other hand, in Act 807, if it is determined that the acquisition of the tag information 226 from substantially all of the third radio tags is completed, the acquisition of the tag information 226 by the third acquisition unit 703 is completed, and the processing in FIG. 8 is ended.

As described above, in further embodiments, in addition to the arrangement similar to that in some embodiments, the third acquisition unit 703 is provided. The third acquisition unit 703 acquires the tag information 226 from the third radio tag that is different from the first radio tag and the second radio tag among the plurality of radio tags 20 by transmitting the request by wireless communication at the third transmission rate slower than the second transmission rate after the acquisition of the tag information 226 by the second acquisition unit 702 is ended, if it is determined that a value indicating the number of responses from the second radio tags for the first request transmitted by the second acquisition unit 702 is equal to or greater than the second threshold value. With this, the arrangement can further improve efficiency in work of reading the tag information 226 from a large number of radio tags 20 by using the third transmission rate in addition to the first transmission rate and the second transmission rate.

The programs executed in some embodiments and further embodiments described above can be provided in a state of being incorporated in advance in a storage medium such as a ROM, but a mode of provision of the program is not limited thereto. The programs executed in some embodiments and further embodiments may be provided in a state of being recorded in a computer readable recording medium such as a CD-ROM, a flexible disk (FD), a CD-R, a digital versatile disk (DVD), or the like as a file in an installable format or executable format.

Furthermore, the programs executed in some embodiments and further embodiments may be provided or distributed by downloading the program stored in a computer connected to a network such as the Internet via the network.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A radio tag reading device configured to acquire predetermined information from a plurality of radio tags by executing wireless communication with the plurality of radio tags, the device comprising:
a controller configured to perform a first acquiring process and a second acquiring process,
the first acquiring process including acquiring the predetermined information from a first radio tag among the plurality of radio tags by transmitting a predetermined request one or more times by the wireless communication at a first transmission rate; and
the second acquiring process including acquiring the predetermined information from a second radio tag different from the first radio tag within the plurality of radio tags by transmitting the request one or more times by the wireless communication at a second transmission rate slower than the first transmission rate after the acquisition of the predetermined information in the first acquiring process is ended.

2. The device according to claim 1, wherein a first communicable range, within which a radio tag may be communicated to by the wireless communication at the first transmission rate, is less than a second communicable range, within which a radio tag may be communicated to by the wireless communication at the second transmission rate.

3. The device according to claim 1 or 2, wherein the first acquiring process includes ending acquisition of the predetermined information when a value indicating the number of responses from the first radio tags for one request is less than a first threshold value.

4. The device according to claim 3,
wherein the first acquiring process includes setting the first threshold as a ratio of a maximum number of responses receivable in the first acquiring process for the one request.

5. The device according to claim 3 or 4, wherein the controller is further configured to perform a receiving process including receiving a change of the first threshold value.

6. The device according to any of claims 3 to 5, wherein the controller is further configured to perform a third acquiring process including acquiring the predetermined information from a third radio tag that is different from the first radio tag and the second radio tag among the plurality of radio tags by transmitting the request by the wireless communication at a third transmission rate slower than the second transmission rate after the acquisition of the predetermined information by the second acquisition unit is ended, when a value indicating the number of responses from the second radio tags to the first request transmitted in the second acquiring process is equal to or greater than a second threshold value.

7. The device according to any of claims 1 to 6, wherein a first communicable range, within which a radio tag may be communicated to by the wireless communication at the first transmission rate, is less than a second communicable range, within which a radio tag may be communicated to by the wireless communication at the second transmission rate.

8. The device according to claim 7, wherein the second communicable range is less than a third communicable range, within which a radio tag may be communicated to by the wireless communication at the third transmission rate.

9. The device according to any of claims 1 to 8, wherein the controller is further configured to perform a third acquiring process including acquiring the predetermined information from a third radio tag that is different from the first radio tag and the second radio tag among the plurality of radio tags by transmitting the request by the wireless communication at a third transmission rate slower than the second transmission rate after the acquisition of the predetermined information by the second acquisition unit is ended, when a value indicating the density of the second radio tags is equal to or greater than a second threshold value.

10. The device according to any of claims 1 to 9, wherein a first communicable range, within which a radio tag may be communicated to by the wireless communication at the first transmission rate, is less than a second communicable range, within which a radio tag may be communicated to by the wireless communication at the second transmission rate.

11. The device according to any of claims 1 to 10, wherein the second communicable range is less than a third communicable range, within which a radio tag may be communicated to by the wireless communication at the third transmission rate.

12. A radio tag reading method of acquiring predetermined information from a plurality of radio tags by executing wireless communication with the plurality of radio tags, the method comprising:
performing a first acquiring process including acquiring the predetermined information from a first radio tag among the plurality of radio tags by transmitting a first request by the wireless communication at a first transmission rate; and
performing a second acquiring process including acquiring the predetermined information from a second radio tag different from the first radio tag by transmitting the second request by the wireless communication at a second transmission rate slower than the first transmission rate after the acquisition of the predetermined information is ended.

13. The method according to claim 12, wherein a first communicable range, within which a radio tag may be communicated to by the wireless communication at the first transmission rate, is less than a second communicable range, within which a radio tag may be communicated to by the wireless communication at the second transmission rate.

14. The method according to claim 12 or 13, wherein the first acquiring process includes ending acquisition of the predetermined information when a value indicating the number of responses from the first radio tags for one request is less than a first threshold value.

15. The method according to claim 14,
wherein the first acquiring process includes setting the first threshold as a ratio of a maximum number of responses receivable in the first acquiring process for the one request.
